(19) Europäisches Patentamt / European Patent Office / Office européen des brevets

(11) **EP 1 741 506 A1**

(12) **EUROPEAN PATENT APPLICATION**
published in accordance with Art. 158(3) EPC

(43) Date of publication:
**10.01.2007 Bulletin 2007/02**

(51) Int Cl.:
***B23B 51/00*** *(2006.01)*

(21) Application number: **04729979.7**

(22) Date of filing: **28.04.2004**

(86) International application number:
**PCT/JP2004/005659**

(87) International publication number:
**WO 2005/105349 (10.11.2005 Gazette 2005/45)**

(84) Designated Contracting States:
**DE**

(71) Applicant: **Sumitomo Electric Hardmetal Corp.**
**Itami-shi,**
**Hyogo 664-0016 (JP)**

(72) Inventor: **Kanada, Yasuyuki**
**Itami-shi,**
**Hyogo 6640016 (JP)**

(74) Representative: **Grünecker, Kinkeldey,**
**Stockmair & Schwanhäusser**
**Anwaltssozietät**
**Maximilianstrasse 58**
**80538 München (DE)**

(54) **DRILL TO WHICH CBN SINTERED BODY IS JOINED**

(57)    A drill having high strength and high abrasion resistance of a cutting edge is provided, which cutting edge does not readily chip when used for cutting a difficult-to-machine material such as cast iron and enables cutting for a long time. In a drill having a pair of cutting edges, a cubic boron nitride sintered body is joined by brazing to a cemented carbide tool base metal on a drill outer periphery side of each of the pair of cutting edges, a face cutting edge length of a cubic boron nitride sintered body (a) joined to one of the pair of cutting edges is made to be different from a face cutting edge length of a cubic boron nitride sintered body (b) joined to the other cutting edge, and a difference between face cutting edge lengths of the cubic boron nitride sintered bodies (a) and (b) is set to at least 0.3 mm.

FIG.1

(A)

EP 1 741 506 A1

## Description

### Technical Field

The present invention relates to a drill having high strength and high abrasion resistance of an edge, which is formed by joining a cubic boron nitride sintered body to a cutting edge portion.

### Background Art

Fine cubic boron nitride (hereafter also simply referred to as CBN) is sintered using various binders to obtain a CBN sintered body which shows good cutting performance for high-hardness iron group metal and cast iron. The CBN sintered body as such is used by, for example, being joined by brazing to a cemented carbide tool base metal and joined to an edge of a tip for cutting or an edge of a rotating tool such as a drill or a reamer (see, for example, Patent Documents 1 and 2).

Patent Document 1: Japanese Patent Laying-Open No. 2001-150216
Patent Document 2: Japanese Patent Laying-Open No. 2000-317711

### Disclosure of the Invention

### Problems to be Solved by the Invention

When a CBN sintered body as described above is joined to a cutting edge of a drill, chipping of the cutting edge may occur in a portion near a rotation axis of the drill. Therefore, the CBN sintered body is not so widely used in a drill as in a tip for cutting.

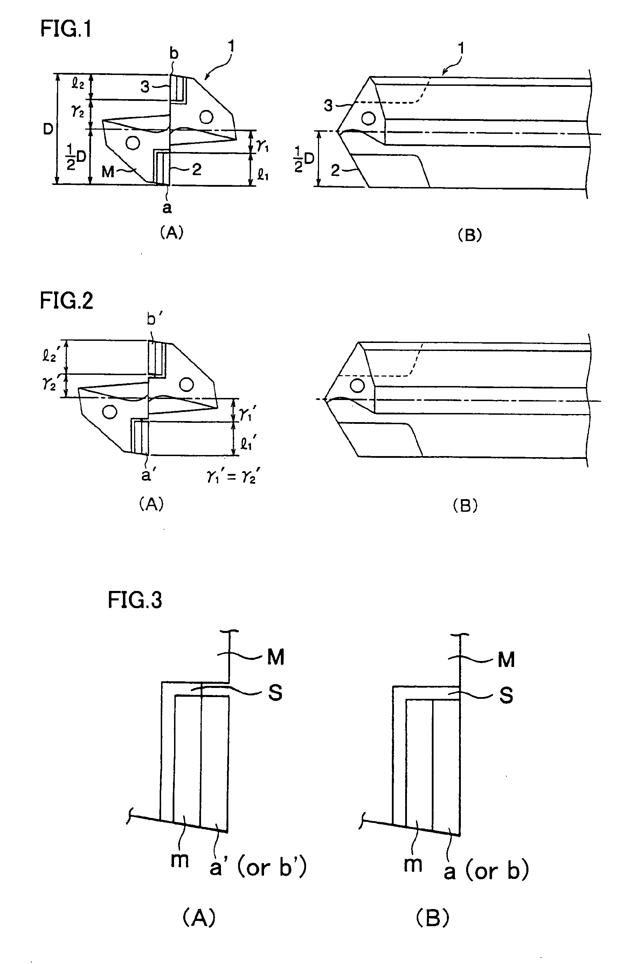

Fig. 2 shows a conventionally known CBN sintered body-joined drill. In this drill, CBN sintered bodies having a substantially rotationally symmetric shape to a center axis of the drill are joined to a pair of cutting edges made of cemented carbide via a brazing material formed mainly with a soft metal such as Ag or Cu. Since the CBN sintered body has high hardness and high heat resistance as compared to cemented carbide, it was expected that the cutting edge had high abrasion resistance and a long life.

In ordinary drilling using a drill, the drill itself rotates and is pressed against a work material to cut the work material. In this step, a cutting speed in a face cutting edge of the drill differs for each region of the face cutting edge corresponding to a distance from a drill center axis. That is, as a region of the face cutting edge is nearer to the drill center axis, a rotation radius of the region during rotation of the drill becomes smaller, which results in a lower linear velocity of the region, and therefore the cutting speed in the region becomes lower. In contrast, as a region of the face cutting edge is farther from the drill center axis, the cutting speed in the region becomes higher. Therefore, on an outer periphery side of the drill having a high cutting speed, a decreased amount of abrasion of the cutting edge and an increased life of the drill due to advantageous characteristics of the CBN sintered body as described above can be expected by joining the CBN sintered body to the cutting edge of the drill. The CBN sintered body, however, has low strength as compared to cemented carbide generally used as a drill base metal, and therefore a chip and/or a loss which is larger than a chip is readily generated in the CBN sintered body in a boundary region between the CBN sintered body and a cemented carbide base metal and in a region near the drill center axis in which a cutting speed is low and a cutting resistance becomes high in the face cutting edge of the drill. As a result, a life of the drill becomes short and cutting for a long time is difficult.

In addition, when the CBN sintered body is joined to a whole front portion of each of the pair of cutting edges of the drill as in a known example shown in Fig. 2, the cutting speed becomes approximately zero and the cutting resistance becomes very high in a portion close to a drill rotation axis. As a result, a chip and/or a loss is readily generated in the CBN sintered body having low strength as compared to cemented carbide. Therefore, an object of the present invention is to provide a drill having a cutting edge which does not readily chip when used for cutting a difficult-to-machine material such as cast iron, and enabling cutting for a long time.

### Means for Solving the Problems

A drill of the present invention has a pair of cutting edges, and is characterized in that a cubic boron nitride sintered body is joined by brazing to a cemented carbide tool base metal on a drill outer periphery side of each of the pair of cutting edges, and that a face cutting edge length of a cubic boron nitride sintered body (a) joined to one of the pair of cutting edges is different from a face cutting edge length of a cubic boron nitride sintered body (b) joined to the other cutting edge, and a difference between face cutting edge lengths of the cubic boron nitride sintered bodies (a) and (b) is at least 0.3 mm.

Furthermore, in the drill, a distance $r_1$ (mm) from a center axis of the drill to the cubic boron nitride sintered body (a), a distance $r_2$ (mm) from the center axis of the drill to the cubic boron nitride sintered body (b) and a length D (mm) from an outer end of one cutting edge to an outer end of the other cutting edge of the drill preferably have relations as follows:

$$0.12 \leq (r_1 \times 2/D), (r_2 \times 2/D) \leq 0.8,$$

and

$$r_1 < r_2.$$

Furthermore, in the drill of the present invention, length D from an outer end of one cutting edge to an outer end of the other cutting edge of the drill is preferably at least 5.0 (mm) and at most 60 (mm).

Furthermore, in the drill of the present invention, it is preferable that the cubic boron nitride sintered body and the cemented carbide tool base metal be joined by brazing via a joint layer, the joint layer include 0.5-20 weight % of at least one of Ti and Zr and 10-40 weight % of Cu, and a remaining portion of the joint layer be formed with Ag and an unavoidable impurity.

In addition, in the drill of the present invention, it is preferable that the cubic boron nitride sintered body and the cemented carbide tool base metal be joined by brazing via a joint layer, the joint layer include 20-30 weight % of Ti and 20-30 weight % of Zr, and a remaining portion of the joint layer be formed with Cu and an unavoidable impurity.

In addition, in the drill of the present invention, it is preferable that the cubic boron nitride sintered body and the cemented carbide tool base metal be joined by brazing via a joint layer, the joint layer include 0.5-10 weight % of at least one of Ti and Zr, 5-25 weight % of at least one of In and Sn, and 15-35 weight % of Cu, and a remaining portion of the joint layer be formed with Ag and an unavoidable impurity.

Furthermore, the drill of the present invention preferably has a cover layer formed with at least one element selected from the group consisting of group 4a elements, group 5a elements and group 6a elements of the periodic table, Al, Si, and B, or at least one compound selected from the group consisting of a nitride, a carbide and an oxide of the at least one element and a solid solution thereof, on a surface of the cutting edge of the drill including a surface of the cubic boron nitride sintered body.

**Effects of the Invention**

With braze joining CBN sintered bodies having different face cutting edge lengths to a pair of cutting edges of a drill, a drill of the present invention has effects such that chipping of the cutting edge of the drill can be prevented, abrasion of the cutting edge can be suppressed, and a life of the drill can be elongated. Furthermore, in the drill of the present invention, since the CBN sintered body is joined to a cemented carbide tool base metal of the drill via a joint layer having specific composition as described in this specification, high joint strength between the cemented carbide tool base metal and the CBN sintered body can be obtained and the life of the drill can be elongated. Furthermore, in the drill of the present invention, since a surface of the cutting edge of the drill is covered with a cover layer having specific composition as described in this specification, the life of the drill can further be elongated.

**Brief Description of the Drawings**

Fig. 1 shows a front view (A) and a side view (B) of an example of a drill of the present invention.
Fig. 2 shows a front view (A) and a side view (B) of a known drill.
Fig. 3 is an enlarged view of joint portions with CBN sintered bodies in a cutting edge of the known drill (A) and a cutting edge of the drill of the present invention (B).
Fig. 4 is a diagram for describing a face cutting edge length of a CBN sintered body on a cutting edge of a drill.
Fig. 5 is a diagram for describing a face cutting edge length of a CBN sintered body on a cutting edge of a drill.

**Description of the Reference Signs**

1: drill, 2: cutting edge, 3: cutting edge.

**Best Modes for Carrying Out the Invention**

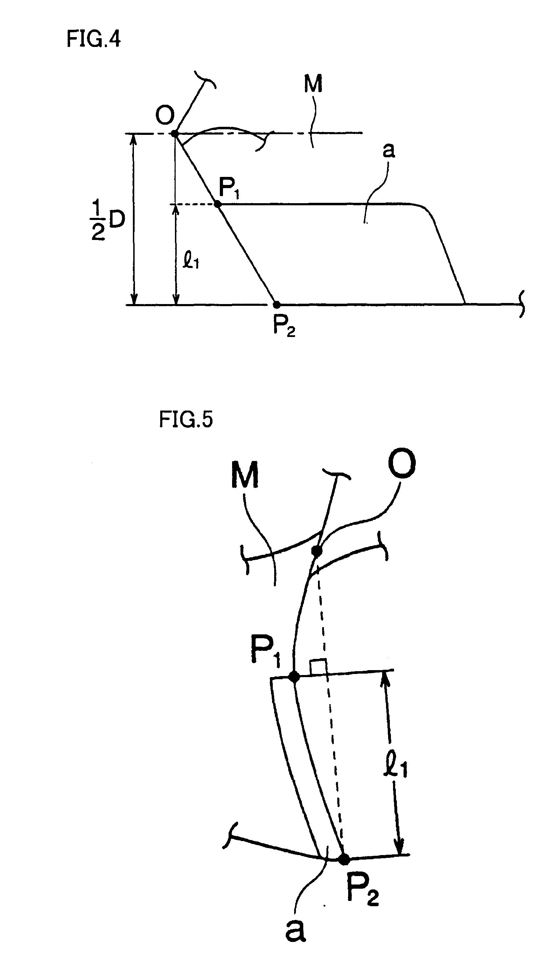

A "face cutting edge length of a CBN sintered body" used in this specification means, when two end portions ($P_1$ and $P_2$ shown in Fig. 4) of the CBN sintered body joined to a drill cutting edge on an edge of the cutting edge in a drill tip portion are projected onto a plane including a drill center axis and an outer end of the drill tip portion ($P_2$ of Fig. 4), a difference ($l_1$ of Fig. 4) in distances from the drill center axis to projected points on the plane respectively corresponding to $P_1$ and $P_2$. Fig. 5 shows an example of a face cutting edge length when a drill cutting edge is not plane. Fig. 5 is a diagram seen from a tip of a drill with setting a drill center axis to be perpendicular to a paper plane, and the cutting edge length of a CBN sintered body a joined to the cutting edge is indicated with $l_1$.

Inventors of the present invention studied a life of a CBN sintered body-joined drill used for drilling. As a result, a drill obtained by braze joining a pair of CBN sintered bodies having different face cutting edge lengths on outer periphery sides of a pair of cutting edges of a drill was found to have reduced occurrence of chipping, a lower speed of abrasion and a long tool life, and thus the present invention was completed.

A conventionally known CBN sintered body-joined drill is described based on Fig. 2. Fig. 2(A) is a front view of the known drill and Fig. 2(B) is a side view of the known drill. In the known drill, CBN sintered bodies a' and b' having the same shape are arranged on a pair of cutting edges of the drill in rotationally symmetric positions to a drill center axis, and are joined by brazing thereto. Therefore, in Fig. 2, $l_1$' is equal to $l_2$' and $r_1$' is equal to $r_2$'. A general method of manufacturing a drill having cutting edges with CBN sintered bodies joined thereto is to braze join a cemented carbide side of a CBN composite sintered body, which is obtained by backing a CBN sintered body with cemented carbide and performing integral sintering, to a cemented carbide tool base metal of a drill via a brazing material mainly formed with Ag and/or Cu.

Fig. 3(A) schematically shows a joint state between the cemented carbide tool base metal and the CBN sintered body in the conventional drill manufactured using the above-described method. In Fig. 3, M indicates the cemented carbide tool base metal, a' or b' (hereafter a description is given representatively using a') indicates the CBN sintered body, m indicates cemented carbide, and S indicates a joint layer formed with the brazing material. The CBN composite sintered body is formed with a' and m. As shown in Fig. 3(A), a boundary portion between cemented carbide tool base metal M and CBN sintered body a' joined by brazing to cemented carbide tool base metal M is formed with a soft brazing joint layer S. In addition, since the brazing material has low wettability to the CBN sintered body, a gap is generated in the boundary portion between cemented carbide tool base metal M and CBN sintered body a'. Therefore, when drilling of a work material is performed using this drill, a cutting resistance or frictional heat is applied to the boundary portion. Since joint layer S is formed with a soft metal, abrasion of joint layer S rapidly occurs by friction with the work material and cuttings.

That is, as cutting proceeds, first the cutting resistance is increased intensively in a portion near joint layer S of the cutting edge, or cuttings fill joint layer S, especially the gap in the boundary portion between cemented carbide tool base metal M and CBN sintered body a', which locally increases a mechanical load in the boundary portion between CBN sintered body a' and cemented carbide tool base metal M, and then chipping of the CBN sintered body having relatively low strength occurs in a portion near the boundary, which chipping causes a larger loss. The inventors have found this process.

Furthermore, it is conventionally believed that sharpness or cutting resistance of each of the pair of cutting edges is preferably equal to each other to improve rectilinear movement of the drill and decrease runout of an edge, and a conventional CBN sintered body-joined drill is designed such that a pair of CBN sintered bodies each joined by brazing to the cemented carbide tool base metal have the same face cutting edge length and are arranged in a rotationally symmetric manner to the drill center axis. This is because, when the pair of CBN sintered bodies have face cutting edge lengths (for example, $l_1$' and $l_2$' in Fig. 2) which are different from each other, each cutting edge may have a different amount of abrasion when abrasion occurs in a flank of a face cutting edge of the drill as cutting proceeds, since the CBN sintered bodies (for example, a' and b' in Fig. 2) and cemented carbide tool base metal M have abrasion resistances substantially different from each other as described above, and thus cutting resistances for the pair of cutting edges may also become different from each other.

The inventors, however, have found out that a chip and a larger loss are generated in the boundary portion of a joint between the CBN sintered body and the cemented carbide tool base metal far before unbalanced amounts of abrasion between the cutting edges as described above become a problem, and prevention of occurrence of such chip or the like is important for elongating a life of the drill. That is, it was found out that, when the CBN sintered bodies joined by brazing to outer periphery sides of the pair of cutting edges of the drill are made to have different face cutting edge lengths, chipping of the CBN sintered body does not readily occur in a portion near the boundary between each of the CBN sintered bodies (a and b) and cemented carbide tool base metal M, and the life of the drill can be substantially elongated.

More specifically, chipping of the CBN sintered body in a portion near the drill center axis can be suppressed by designing the drill such that cemented carbide as the cemented carbide tool base metal acts as a cutting edge in the portion near the drill center axis in which a cutting resistance becomes high. In addition, when the CBN sintered bodies joined by brazing to the pair of cutting edges on the outer periphery sides of the drill are made to have different face cutting edge lengths, a distance from the drill center axis to the boundary portion between the CBN sintered body and the cemented carbide tool base metal in each cutting edge can be made different from each other. With designing the drill as described above, when chipping or abrasion occurs in a boundary position between the CBN sintered body and the cemented carbide tool base metal in one of the pair of cutting edges and an uncut portion due to the chipping or the like is generated in a cut material, the uncut portion can be removed by a cemented carbide cutting edge or a CBN sintered body cutting edge of the other cutting edge because a position of the uncut portion does not correspond to a boundary position between the CBN sintered body and the cemented carbide tool base metal in the other cutting edge. Therefore, even when chipping occurs in the boundary position between the CBN sintered body and the cemented carbide tool base metal in one cutting edge, it is not necessary for the same cutting edge to cut the uncut portion of the cut material again, and thus a large load is not applied to the boundary portion of the cutting edge, which can substantially suppress occurrence of chipping or abrasion of the CBN sintered body in a portion near the boundary portion of the cutting edge. Furthermore, it was found out that, by using a brazing material having specific composition including Ti and/or Zr as a brazing material for joining the CBN sintered body with the cemented carbide tool base metal, wettability of the brazing material to the cemented carbide tool base metal can be increased and generation of a gap in the boundary portion between the CBN sintered body and the cemented carbide tool base metal can be inhibited.

A drill of the present invention is described based on Fig. 1. Fig. 1A is a front view seen from a tip of the drill in a direction of a drill center axis. Fig. 1B is a side view of the same drill seen from a direction perpendicular to the drill center axis. A drill 1 has a cutting edge 2 and a cutting edge 3, and CBN sintered bodies a and b are joined by brazing to cemented carbide tool base metal M in respective cutting edges 2 and 3 on an outer periphery side of the drill, that is, on outer end sides of respective cutting edges. Fig. 3(B) shows a CBN sintered body joint portion of the cutting edge of the drill. The cutting edge is constructed by backing each of CBN sintered bodies a and b with cemented carbide m and then performing integral sintering to obtain a CBN composite sintered body formed with a and m or b and m, and then braze joining a cemented carbide m side of the CBN composite sintered body to cemented carbide tool base metal M with a brazing material S.

In the drill shown in Fig. 1A, a length from an outer end of one drill cutting edge to an outer end of the other drill cutting edge (hereafter also simply referred to as a drill diameter) is D, and a distance from the drill center axis to the outer end of one drill cutting edge (hereafter also simply referred to as a drill radius) is 1/2D. In addition, a cutting edge length of CBN sintered body a joined to cutting edge 2 is $l_1$ and a distance from the drill center axis to the CBN sintered body is $r_1$. On the other hand, a cutting edge length of CBN sintered body b joined to cutting edge 3 is $l_2$ and a distance from the drill center axis to the CBN sintered body is $r_2$.

The drill of the present invention is made such that, even when a portion of a cut material remains uncut in a position corresponding to a boundary position between the CBN sintered body and the cemented carbide tool base metal in one cutting edge, that position of an uncut portion of the cut material does not correspond to a boundary position between the CBN sintered body and the cemented carbide tool base metal in the other cutting edge when the other cutting edge subsequently cuts the material, and the uncut portion can be cut with a CBN sintered body cutting edge or a cemented carbide cutting edge. With this, occurrence of chipping or the like in the CBN sintered body in a portion near a boundary between the CBN sintered body and the cemented carbide tool base metal of each cutting edge is suppressed. An effect of the present invention as described above may not be obtained sufficiently when a difference between differing values of cutting edge length $l_1$ and cutting edge length $l_2$ is small. Therefore, the difference between $l_1$ and $l_2$ is preferably at least 0.3 mm, and more preferably at least 0.5 mm.

Furthermore, in the drill of the present invention, distance $r_1$ (mm) from the center axis of the drill to CBN sintered body a, distance $r_2$ from the center axis of the drill to CBN sintered body b and drill diameter D (mm) preferably have relations as follows:

$$0.12 \leq (r_1 \times 2/D), (r_2 \times 2/D) \leq 0.8, \text{ and } r_1 < r_2.$$

In this situation, a shorter distance of distances from the center axis to respective CBN sintered bodies in the pair of cutting edges of the drill can be defined as $r_1$, and a longer distance can be defined as $r_2$.

A condition as described above indicates that, in the drill of the present invention, it is preferable to set distances

$r_1$ and $r_2$ from the center axis of the drill to respective CBN sintered bodies a and b to different values, set a ratio of each of $r_1$ and $r_2$ to the drill radius (D/2) to at least 0.12, and set a ratio of $r_2$ to the drill radius (D/2) to at most 0.8. Since a cutting resistance steeply becomes high in a portion near the drill center axis, when the ratio of $r_1$ to the drill radius (D/2) is less than 0.12, a load applied to CBN sintered body a joined to the drill cutting edge becomes large, and chipping or progress of chipping of the CBN sintered body readily occurs. On the other hand, a cutting speed in each region of the cutting edge becomes higher as a distance from the center axis of the drill increases. Therefore, when the ratio of $r_2$ to the drill radius (D/2) is larger than 0.8, cemented carbide forms a portion of the cutting edge having a high cutting speed, and a speed of abrasion of the cemented carbide cutting edge becomes substantially high. Therefore, ratios of $r_1$ and $r_2$ to the drill radius are preferably within a range from 0.12 to 0.8.

In the drill of the present invention, the length from the outer end of one cutting edge to the outer end of the other cutting edge of the drill, that is, diameter D of the drill in Fig. 1A is preferably at least 5.0 (mm) and at most 60 (mm). When diameter D of the drill is less than 5.0 (mm), a core diameter of the drill becomes small and thus strength of the drill decreases and the drill is easily broken. When diameter D of the drill is larger than 60 (mm), on the other hand, a resistance during cutting of a material becomes large and a large torque is required to rotate the drill, which goes beyond a mechanical power used for a common drill, and therefore desired processing accuracy cannot be ensured.

As described above, in the drill of the present invention, a material obtained by backing each of the CBN sintered bodies (a and b) with cemented carbide m and then performing integral sintering is joined to cemented carbide tool base metal M via joint layer S formed with a brazing material, as shown in Fig. 3. Each of materials as described above will now be described specifically.

Materials known in the art can be used in cemented carbide tool base metal M, cemented carbide m and CBN sintered body a (hereafter, the same is applied to b in Fig. 1A) shown in Fig. 3. As cemented carbide tool base metal M, for example, though cemented carbide of any of a P type, a K type and an M type as defined in JIS B4053 can be used, it is preferable to use the K type for processing of a cast iron material and a P type material for processing of a steel material. Similarly, though cemented carbide of any of the P type, K type and M type can be used as cemented carbide m, it is preferable to use a K type material considering a good joint property thereof with the CBN sintered body. As CBN sintered body a, a sintered body including CBN within a range of 35-90 volume % can be used. A sintered body including CBN within a range of 75-90 volume % is preferred when the cast iron material is to be processed, and a sintered body including CBN within a range of 40-70 volume % is preferred when the steel material is to be processed.

When a conventionally known brazing material including Ag or Cu is used for joining as described above, since the brazing material has low wettability to the CBN sintered body, only a portion between cemented carbide m backed to the CBN sintered body and cemented carbide tool base metal M is joined with the brazing material, and a gap is readily generated in a boundary portion between CBN sintered body a and cemented carbide tool base metal M since CBN sintered body a and cemented carbide tool base metal M are not readily joined to each other directly. As a result, cuttings tend to fill the gap.

As the brazing material used in joint layer S in the present invention, a brazing material including 0.5-20 weight % of at least one of Ti and Zr and 10-40 weight % of Cu and having a remaining portion formed with Ag and an unavoidable impurity is preferably used. With adding at least one of Ti and Zr to an alloy of Ag and Cu as described above, wettability of the brazing material to a surface of CBN sintered body a can be improved significantly, and joint by brazing of CBN sintered body a and cemented carbide tool base metal M is enabled. This is preferable because the gap in the boundary portion between CBN sintered body a and cemented carbide tool base metal M can be eliminated or substantially reduced and filling of this portion with cuttings can be suppressed.

When a content of at least one of Ti and Zr in the brazing material is less than 0.5 weight %, an effect of improvement of wettability of the brazing material to CBN sintered body a is not obtained. When the content is higher than 20 weight %, on the other hand, a melting point of the brazing material is increased, and therefore distortion of CBN sintered body a or cracking resulting from the distortion tends to occur during brazing. In addition, it is preferable not to braze CBN sintered body a to cemented carbide tool base metal M at a high temperature to prevent distortion or cracking of CBN sintered body a. A content of Cu set to 10-30 weight % to Ag as a main component of the brazing material is preferable because eutectic melting point depression with Ag and Cu occurs and brazing at a low temperature is enabled.

For the same reason as described above, it is preferable to join CBN sintered body a to cemented carbide tool base metal M with a brazing material including 20-30 weight % of Ti and 20-30 weight % of Zr and having a remaining portion formed with Cu and an unavoidable impurity to form joint layer S, because generation of a gap in the boundary portion between CBN sintered body a and cemented carbide tool base metal M can be suppressed.

When the brazing material includes Ti and Zr within aforementioned ranges and has a remaining portion formed with Cu and an unavoidable impurity, wettability of the brazing material to CBN sintered body a is improved with Ti or Zr and, since eutectic melting point depression with three elements occurs, brazing of CBN sintered body a and cemented carbide tool base metal M can be performed at a relatively low temperature. With this, occurrence of distortion of CBN sintered body a or cracking resulting therefrom due to heating to a high temperature can be suppressed.

For the same reason as described above, it is preferable to use a brazing material including 0.5-10 weight % of at least one of Ti and Zr, 5-25 weight % of at least one of In and Sn, and 15-35 weight % of Cu and having a remaining portion formed with Ag and an unavoidable impurity for joint layer S between CBN sintered body a and cemented carbide tool base metal M, because generation of a gap in the boundary portion between CBN sintered body a and cemented carbide tool base metal M can be suppressed. In this situation, the brazing material including at least one of In and Sn within a range of 5-25 weight % is preferable because melting point depression occurs and a temperature allowing brazing can become lower.

Furthermore, in the drill of the present invention, a cover layer formed with at least one element selected from the group consisting of group 4a elements, group 5a elements and group 6a elements of the periodic table, Al, Si, and B, or at least one compound selected from the group consisting of a nitride, a carbide and an oxide of the at least one element and a solid solution thereof, is preferably formed on a surface of the cutting edge of the drill using a physical vapor deposition method or a chemical vapor deposition method. By forming the cover layer on the surface of the cutting edge of the drill, abrasion resistance of the surface of the cutting edge of the drill can be increased and a life of the drill can be elongated.

Examples

Though the present invention will further be described based on examples, the present invention is not limited to the examples.

[Example 1]

Tests were performed using a drill having a shape as shown in Fig. 1, the drill diameter (D) of 25 mm, and $r_1$ and $r_2$ shown in Fig. 1 of values indicated in Table 1.

[Table 1]

|  | Drill No. | $r_1$ | $r_2$ | $l_1 - l_2$ |
|---|---|---|---|---|
| Comparative Example 1A | 1A | 0.9 mm | 0.9 mm | 0 mm |
| Example 1B | 1B | 0.7 mm | 1.0 mm | 0.3 mm |
| Comparative Example 1C | 1C | 3.5 mm | 3.5 mm | 0 mm |
| Example 1D | 1D | 3.0 mm | 4.0 mm | 1 mm |
| Comparative Example 1E | 1E | 8.5 mm | 8.5 mm | 0 mm |
| Example 1F | 1F | 8.0 mm | 11.0 mm | 3 mm |
| Outside diameter of drill: 25 mm | | | | |

Each of drills 1A-1F in Table 1 was produced by joining a CBN sintered body to a cemented carbide tool base metal in each of a pair of cutting edges of a drill via a brazing material formed with Ag: 72 weight %, Cu: 26 weight % and Ti: 2 weight %, and then polishing the cutting edge of the drill using a diamond grinder. Since a width of joint layer S shown in Fig. 3B is extremely narrow in each of the examples and comparative examples, a sum of $r_1$ or $r_2$ in each of the pair of cutting edges of the drill and a face cutting edge length of the CBN sintered body of the cutting edge is substantially 12.5 mm. In each of comparative examples 1A, 1C and 1E indicated in Table 1, a pair of CBN sintered bodies of the drill have the same face cutting edge length. In contrast, in the drill of each of examples 1B, 1D and 1F, $r_1$ and $r_2$ are different from each other and the CBN sintered body in each cutting edge has a different face cutting edge length. Drilling of cast iron was performed using the drill indicated in Table 1, and cutting performance was evaluated by a number of holes that could be drilled until the drill was deteriorated. Results obtained are indicated in Table 2.

[Table 2]

|  | Drill No. Used in Test | Cutting Performance Number of Drilled Holes |
|---|---|---|
| Comparative Example 2A | 1A | 53 Holes (Chipping of drill occurred immediately after start of drilling) |
| Example 2B | 1B | 1040 Holes |
| Comparative Example 2C | 1C | 177 Holes (Chipping of drill occurred) |

(continued)

|  | Drill No. Used in Test | Cutting Performance Number of Drilled Holes |
|---|---|---|
| Example 2D | 1D | 2250 Holes |
| Comparative Example 2E | 1E | 151 Holes (Substantial abrasion of drill) |
| Example 2F | 1F | 1100 Holes |
| Work material: FC200 (cast iron)<br>Cutting condition: Rotation number of drill 8000 (rpm)<br>Feed ratio of drill 0.1 (mm/cutting edge)<br>Depth of drilled hole 30 (mm)<br>Soluble cutting fluid was used | | |

It is apparent from the results indicated in Table 2 that the number of holes that could be drilled is extremely large in each of examples 2B, 2D and 2F using the drill in which the CBN sintered bodies joined to the pair of cutting edges of the drill have different face cutting edge lengths with a difference of at least 0.3 mm. That is, drills ofNos. 1B, 1D and 1F are shown to have good continuous drilling performance. In contrast, in each of comparative examples 2A and 2C of Table 2, a small chip was generated in the CBN sintered body in a boundary portion between the CBN sintered body and the cemented carbide tool base metal of one cutting edge of the drill in a short time after a start of the test, and a portion of the chip generated an uncut portion of a material during cutting of a work material, which uncut portion hit a boundary portion between the CBN sintered body and the cemented carbide tool base metal of the other cutting edge of the drill to cause chipping of the CBN sintered body of the other cutting edge. With a mechanism of a chip of one cutting edge promoting growth of a chip of the other cutting edge, chipping of the CBN sintered body of the cutting edge proceeded rapidly and finally caused a large loss of the cutting edge which made drilling of the work material impossible. As a result, drill 1A (comparative example 2A) and drill 1C (comparative example 2C) could perform only small numbers of drilling. In addition, drill 1E (comparative example 2E) has $r_1$ and $r_2$ larger than those of drill 1A and drill 1C and, since a cutting speed is high in the boundary portion between the CBN sintered body and the cemented carbide tool base metal of the cutting edge, abrasion rapidly occurs in a portion of the cutting edge near the boundary portion, which portion is formed with cemented carbide. With rapid abrasion of one cutting edge, a portion of the cutting edge subjected to abrasion generates an uncut portion of a cut material, and therefore abrasion also occurs rapidly in a portion of the other cutting edge in a corresponding position. Since interaction of abrasion as such caused rapid progress of abrasion of the drill cutting edge, drill 1E could perform only a small number of drilling.

In contrast, in drill 1B (example 2B) and drill 1D (example 2D) each having different face cutting edge lengths $l_1$ and $l_2$ of the CBN sintered bodies, even when a small chip is generated in the CBN sintered body in a portion near the boundary between the CBN sintered body and the cemented carbide tool base metal of one cutting edge and an uncut portion of the work material is generated, an edge of the other cutting edge formed with cemented carbide can remove the uncut portion. Therefore, even when a small chip is generated in the CBN sintered body in a portion near the boundary between the CBN sintered body and the cemented carbide tool base metal of the cutting edge, an uncut portion of the work material generated with the chip does not apply a large load again to the portion of the CBN sintered body in which the chip was generated, and progress of chipping of the CBN sintered body can be suppressed. Accordingly, a life of a tool was substantially elongated in each example as compared to each comparative example. In addition, in drill 1F (example 2F), even when abrasion of the cutting edge of cemented carbide occurs in a portion near the boundary portion between the CBN sintered body and the cemented carbide tool base metal of one cutting edge and an uncut portion of the work material is generated, a CBN sintered body cutting edge of the other cutting edge can cut and remove the uncut portion. With this, progress of abrasion of a cemented carbide cutting edge portion could be suppressed and a life of the tool could be substantially elongated.

[Example 2]

Tests for cutting performance of drills were performed using drills 3A-3E each having the CBN sintered body joined by brazing to the cemented carbide tool base metal as shown in Fig. 1, the diameter (D) of 34 mm, and $r_1$ and $r_2$ shown in Fig. 1 of values indicated in Table 3. An object of the tests is to examine an effect of $r_1$ and $r_2$ on cutting performance of the drill.

[Table 3]

| Drill No. | $r_1$ (mm) | $r_2$ (mm) | $r_1 \times 2/D$ | $r_2 \times 2/D$ |
|---|---|---|---|---|
| 3A | 1.2 | 1.7 | 0.07 | 0.10 |
| 3B | 2.1 | 3.3 | 0.12 | 0.19 |
| 3C | 3.5 | 5.1 | 0.21 | 0.30 |
| 3D | 4.1 | 6.8 | 0.24 | 0.40 |
| 3E | 7.6 | 9.9 | 0.45 | 0.58 |
| 3F | 10.8 | 12.9 | 0.64 | 0.76 |
| 3G | 13.1 | 14.2 | 0.77 | 0.84 |
| Drill diameter (D): 34 mm | | | | |

Tests of drilling cast iron were performed using drills 3A-3G indicated in Table 3 and using a condition as indicated below Table 4. Results obtained are indicated in Table 4. In Table 4, a number of holes is indicated which could be drilled until normal drilling became impossible when continuous drilling of cast iron was performed using each drill.

[Table 4]

| Test No. | Drill No. Used in Test | Cutting Performance (Number of Holes) |
|---|---|---|
| Example 4A | 3A | 1639 Holes |
| Example 4B | 3B | 3099 Holes |
| Example 4C | 3C | 3356 Holes |
| Example 4D | 3D | 3122 Holes |
| Example 4E | 3E | 3088 Holes |
| Example 4F | 3F | 3215 Holes |
| Example 4G | 3G | 1756 Holes |
| Work material: FC250 (cast iron) Cutting condition: Rotation number of drill 5000 (rpm) Feed ratio of drill 0.12 (mm/cutting edge) Depth of drilled hole 35 (mm) Soluble cutting fluid was used | | |

As indicated in Table 4, each of drills 3A-3G has high durability since chipping of the edge of the drill did not occur immediately after a start of drilling of cast iron. Each of drills 3B-3F, however, in which distance $r_1$ (mm) from the center axis of the drill to the CBN sintered body joined to one cutting edge of the drill, distance $r_2$ (mm) from the center axis of the drill to the CBN sintered body joined to the other cutting edge of the drill and drill diameter D (mm) have relations as follows:

$0.12 \leq (r_1 \times 2/D)$, $(r_2 \times 2/D) \leq 0.8$, and $r_1 < r_2$, could drill a larger number of holes in the work material until a life of the drill ended as compared to drills 3A and 3G, which indicates that chipping of the CBN sintered body joined to the cutting edge and abrasion of a cemented carbide portion of the cutting edge do not readily occur therein.

[Example 3]

Tests were performed to examine an effect of composition of the brazing material used for braze joining the CBN sintered body to the cemented carbide tool base metal in the cutting edge of the drill on durability of the drill. A drill used in the test had a shape similar to that of the drill shown in Fig. 1, the drill diameter of 5 mm, $r_1$ of 0.5 mm, and $r_2$ of 2.0 mm. A CBN composite sintered body, which was obtained by backing a CBN sintered body with cemented carbide formed with WC: 90 weight % and Co: 10 weight % and performing integral sintering, was joined by brazing to a cutting edge of a cemented carbide tool base metal of the drill using each of brazing materials 5A-5D as indicated in Table 5. A resulting joined body was polished to produce each of drills 6A-6D.

The brazing material was prepared as follows. A metal powder mixture having composition as indicated in Table 5 (a value in front of a chemical symbol of an element indicates weight %) was prepared, and the powder was mixed with an organic solvent to prepare each of brazing materials 5A-5D. Each of brazing materials 5A-5D was in a paste-like form. Brazing of the CBN composite sintered body to the cemented carbide tool base metal was performed in a vacuum atmosphere of $1 \times 10^{-5}$ torr when each of brazing materials 5B-5D was used, and was performed in an air atmosphere when brazing material 5A was used. A brazing temperature for each brazing material used is also indicated in Table 5. Though each of brazing materials 5A-5D indicated in Table 5 includes Ag or Cu as a main component, a melting point thereof differs since a kind of another metal included and composition of metals are different. Therefore, the brazing temperature indicated in Table 5 varies according to a kind of the brazing material.

[Table 5]

| Drill No. | Brazing Material No. | Composition of Brazing Material | Brazing Temperature |
|---|---|---|---|
| 6A | 5A | 63Ag-29Cu-5Sn-3Ni | 750 °C |
| 6B | 5B | 70Ag-26Cu-4Ti | 820 °C |
| 6C | 5C | 25Ti-25Zr-50Cu | 850 °C |
| 6D | 5D | 59Ag-27Cu-12In-2Ti | 720 °C |

Furthermore, a cover layer of TiAlN having a thickness of 1.0 $\mu$m was formed on a surface of the cutting edge of each of drills 6A-6D using a PVD (physical vapor deposition) method. Thereafter, drilling of carbon steel was performed using each drill, and a number of holes that could be drilled until drilling became impossible due to chipping of the cutting edge of the drill or the like is indicated in Table 6 as cutting performance of the drill. A work material used for drilling and a cutting condition are indicated below Table 6.

[Table 6]

| Drill No. Used in Test | Cutting Performance (Number of Drilled Holes) |
|---|---|
| 6A | 135 Holes |
| 6B | 875 Holes |
| 6C | 1533 Holes |
| 6D | 863 Holes |

Work material: S55C (carbon steel)
Cutting condition: Rotation number of drill 15000 (rpm)
Feed ratio of drill 0.1 (mm/cutting edge)
Depth of drilled hole 20 (mm)
Soluble cutting fluid was used

In drill 6A which was produced using brazing material 5A having low wettability to the CBN sintered body, a gap was generated in a boundary portion between the CBN sintered body and the cemented carbide tool base metal, and a problem of filling of the gap with cuttings occurred. As a result, a cutting resistance became very high in the boundary position of drill 6A and a chip of the CBN sintered body was generated in a portion near the boundary, and since the chip was further expanded, drilling of the work material with drill 6A became impossible when only a small number of holes were drilled.

On the other hand, each of drills 6B, 6C and 6D respectively produced using brazing materials 5B, 5C and 5D having high wettability to the CBN sintered body does not have a gap in the boundary portion between the CBN sintered body and the cemented carbide tool base metal, and therefore cuttings do not readily fill the portion. Therefore, as indicated in Table 6, the number of holes that could be continuously drilled in the work material using each of drills 6B-6D was larger than that with drill 6A, and drills 6B-6D were shown to have higher durability and longer lives than those of drill 6A.

**Claims**

1. A drill having a pair of cutting edges, wherein
   a cubic boron nitride sintered body is joined by brazing to a cemented carbide tool base metal on a drill outer periphery side of each of said pair of cutting edges; and

a face cutting edge length of a cubic boron nitride sintered body (a) joined to one of said pair of cutting edges is different from a face cutting edge length of a cubic boron nitride sintered body (b) joined to the other cutting edge, and a difference between face cutting edge lengths of said cubic boron nitride sintered bodies (a) and (b) is at least 0.3 mm.

2. The drill according to claim 1, wherein

a distance $r_1$ (mm) from a center axis of said drill to said cubic boron nitride sintered body (a), a distance $r_2$ (mm) from the center axis of said drill to said cubic boron nitride sintered body (b) and a length D (mm) from an outer end of one cutting edge to an outer end of the other cutting edge of said drill have relations as follows:

$$0.12 \leq (r_1 \times 2/D),\ (r_2 \times 2/D) \leq 0.8,$$

and

$$r_1 < r_2.$$

3. The drill according to any of claims 1 and 2, wherein

a length D from an outer end of one cutting edge to an outer end of the other cutting edge of said drill is at least 5.0 (mm) and at most 60 (mm).

4. The drill according to any of claims 1 to 3, wherein

said cubic boron nitride sintered body and said cemented carbide tool base metal are joined by brazing via a joint layer, said joint layer includes 0.5-20 weight % of at least one of Ti and Zr and 10-40 weight % of Cu, and a remaining portion of said joint layer is formed with Ag and an unavoidable impurity.

5. The drill according to any of claims 1 to 3, wherein

said cubic boron nitride sintered body and said cemented carbide tool base metal are joined by brazing via a joint layer, said joint layer includes 20-30 weight % of Ti and 20-30 weight % of Zr, and a remaining portion of said joint layer is formed with Cu and an unavoidable impurity.

6. The drill according to any of claims 1 to 3, wherein

said cubic boron nitride sintered body and said cemented carbide tool base metal are joined by brazing via a joint layer, said joint layer includes 0.5-10 weight % of at least one of Ti and Zr, 5-25 weight % of at least one of In and Sn, and 15-35 weight % of Cu, and a remaining portion of said joint layer is formed with Ag and an unavoidable impurity.

7. The drill according to any of claims 1 to 6, comprising

a cover layer formed with at least one element selected from the group consisting of group 4a elements, group 5a elements and group 6a elements of the periodic table, Al, Si, and B, or at least one compound selected from the group consisting of a nitride, a carbide and an oxide of said at least one element and a solid solution thereof, on a surface of the cutting edge of said drill including a surface of said cubic boron nitride sintered body.

FIG.1

(A)　　　　　　　　　　　　　　　(B)

FIG.2

$\gamma_1' = \gamma_2'$

(A)　　　　　　　　　　　　　　　(B)

FIG.3

m　a' (or b')　　　　　　　　m　a (or b)

(A)　　　　　　　　　　　　　　　(B)

FIG.4

FIG.5

## INTERNATIONAL SEARCH REPORT

| | International application No. |
|---|---|
| | PCT/JP2004/005659 |

**A. CLASSIFICATION OF SUBJECT MATTER**
Int.Cl⁷ 2B3B51/00

According to International Patent Classification (IPC) or to both national classification and IPC

**B. FIELDS SEARCHED**

Minimum documentation searched (classification system followed by classification symbols)
Int.Cl⁷ 2B3B51/00, 27/00-27/24

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2004 |
| Kokai Jitsuyo Shinan Koho | 1971-2004 | Toroku Jitsuyo Shinan Koho | 1994-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2002-263935 A (Dijet Industrial Co., Ltd.), | 1-3 |
| Y | 17 September, 2002 (17.09.02), | 4-7 |
| | Full text | |
| | (Family: none) | |
| | | |
| Y | WO 02/05991 A1 (Sumitomo Electric Industries, Ltd.), | 4-7 |
| | 24 January, 2002 (24.01.02), | |
| | Claims; page 8, line 15 to page 9, line 6 | |
| | & US 2002/0190105 A      & KR 2002043221 A | |
| | & EP 1302265 A | |

| ☐ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 May, 2004 (24.05.04) | 08 June, 2004 (08.06.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001150216 A
- JP 2000317711 A